Europäisches Patentamt

European Patent Office

Office européen des brevets

(19)

(11) Veröffentlichungsnummer: **0 017 722**
**B2**

(12) # NEUE EUROPÄISCHE PATENTSCHRIFT

(45) Veröffentlichungstag der neuen Patentschrift:
**28.11.90**

(51) Int. Cl.⁵: **D 21 F 1/00**

(21) Anmeldenummer: **80100770.9**

(22) Anmeldetag: **15.02.80**

(54) **Siebband aus thermofixierbaren Kunststoffwendeln und Verfahren zu dessen Herstellung.**

(30) Priorität: **23.04.79 NL 7903176**
**21.09.79 DE 2938221**

(43) Veröffentlichungstag der Anmeldung:
**29.10.80 Patentblatt 80/22**

(45) Bekanntmachung des Hinweises auf die
Patenterteilung:
**15.08.84 Patenblatt 84/33**

(45) Bekanntmachung des Hinweises auf die
Entscheidung über den Einspruch:
**28.11.90 Patentblatt 90/48**

(84) Benannte Vertragsstaaten:
**AT BE CH DE FR GB IT NL SE**

(56) Entgegenhaltungen:
**DE-A-1 951 204**
**DE-A-2 419 751**
**DE-C- 77 147**
**DE-C- 80 763**
**GB-A-1 018 419**

**DIN Normen-Blatt Nr. 4196, Nr. 60900, Nr.60001
u.Nr.60905**

(73) Patentinhaber: **SITEG Siebtechnik GmbH
Enscheder Strasse 18
D-4422 Ahaus-Alstätte (DE)**

(73) Patentinhaber: **TEXTIEL TECHNIEK
HAAKSBERGEN B.V.
Postfach 36
NL-7480 AA Haaksbergen (NL)**

(72) Erfinder: **Lefferts, Johannes
Oldenkottebrink 85
NL-7544 LM Enschede (NL)**

(74) Vertreter: **Abitz, Walter, Dr.-Ing. et al
Dr.-Ing. Walter Abitz Dr. Dieter F. Morf Dipl.-
Phys. M. Gritschneder Dr. A. Freiherr von
Wittgenstein Patentanwälte Poschingerstrasse
6 Postfach 86 01 09
D-8000 München 86 (DE)**

Courier Press, Leamington Spa, England.

EP 0 017 722 B2

**Beschreibung**

Die Erfindung betrifft ein Siebband nach dem Oberbegriff des Anspruches 1 sowie ein Verfahren zu dessen Herstellung nach dem Oberbegriff des Anspruches 5.

Bei einem aus der DE—A—24 19 751 bekannten Siebband nach dem Oberbegriff des Anspruches 1 besitzen die Wendeln nach dem Ineinanderfügen ihrer Windungen eine zugfedermässige Vorspannung, die die aneinanderliegenden Windungen gegeneinander drückt. Die zugfedermässige Vorspannung entsteht dadurch, dass zur Herstellung des Siebbandes Wendeln verwendet werden, die eng gewickelt sind. Zum gegenseitigen Ineinanderschieben der Wendeln werden diese dann soweit gestreckt, dass zwischen die Windungen der einen Wendel die Windungen der nächsten Wendel eingeschoben werden können. Wenn während des Laufs eines Siebbandes, zum Beispiel in einer Papiermaschine, das Siebband um Walzen geleitet wird, so "scharnieren" die Wendeln um die Steckdrähte, wodurch die gegeneinandergedrückten Seiten der ineinandergreifenden Windungen gegeneinander bewegt werden, was zu Reibung und Abnutzung führt die Lebensdauer des bekannten Siebbandes wird dadurch begrenzt. Bei dem bekannten Siebband werden Wendeln verwendet, die keine Torsion besitzen, das heisst der Kunststoffaden besitzt pro Windung keine Drehung um seine Längsachse. Die Torsion würde zu einer Verformung und Verzerrung zunächst des Kunststoffdrahtes und dann auch der daraus hergestellten Wendeln fürhen. Durch diese Verzerrung der Wendeln würde die Herstellung des Siebes erschwert und die Widerstandsfähigkeit des Siebbandes zum Beispiel gegen Stauchungen, beeinträchtig.

Aus der DE—A—1 951 204 ist das Thermofixieren von Sieben und Tüchern aus Kunststoff für Papiermaschinen bekannt. Es handelt sich hierbei jedoch ausschließlich um gewebte Siebe und Tücher, wie sie herkömmlicherweise in Papiermaschinen verwendet werden.

Die Aufgabe der Erfindung besteht darin, ein Siebband der eingangs genannten Art zu schaffen, das eine hohe Lebensdauer besitzt und markierungsfrei ist, sowie ein Verfahren zu dessen Herstellung zur Verfügung zu stellen.

Diese Ausgabe wird durch die kennzeichnenden Merkmale des Anspruches 1 bzw. des Anspruches 5 gelöst

Eines der Merkmale des erfindunggemäßen Siebbandes, sowie des aus der DE—A—2 419 751 bekannten Siebbandes, ist, daß der Draht der Wendeln torsionsfrei ist. Dies bedeutet, daß der Kunststoffdraht bei der Herstellung der Wendeln keine Drehung um seine Längsachse erfährt.

Das erfindungsgemäße Sieb eignet sich insbesondere zur Verwendung in der Trockenpartie einer Papiermaschine. Dadurch, dass die Windungen der einzelnen Wendeln tot, das heisst ohne zugfedermässige Vorspannung im Siebband liegen, findet zwischen ihnen keine gegeseitige Reibung und Abnutzung statt. Die für die Herstellung des Siebbandes verwendeten Wendeln aus thermofixierbarem Kunststoffdraht können zunächst einen solchen Querschnitt besitzen, dass die Wendeln nach dem Ineinanderschieben einen möglichst grossen Kanal mit rundem Querschnitt bilden, durch den die Steckdrähte leicht eingeschoben werden können. Der abgeflachte Querschnitt der Wendeln und die gewellte Form der Steckdrähte wird erst nach dem Einschieben der Streckdrähte durch Thermofixieren des Siebbandes unter Spannung erzeugt. Die Oberfläche des auf diese Weise thermofixierten Siebbandes ist sehr glatt und daher weitgehend markierungsfrei.

Bevorzugte Ausgestaltungen der Erfindung sind Gegenstand der Unteransprüche.

Ausführungsbeispiele der Erfindung werden nachfolgend anhand der Zeichnung näher erläutert. Es zeigen:

Figur 1 im Querschnitt in Längsrichtung des Siebbandes ein Detail, das zum Teil von der Erfindung abweicht;

Figur 2 im Querschnitt in Längsrichtung ein Detail eines Siebbandes vor der Thermofixierung;

Figur 3 das Siebband nach Figur 2 nach der Thermofixierung;

Figur 4 in Draufsicht einen Ausschnitt aus dem Siebband;

Figur 5 eine Wendel, deren Draht bei der Herstellung Torsion erhalten hat;

Figur 6 eine torsionsfrei hergestellte Wendel;

Figur 7 das Ineinandergreifen der Windungen benachbarter Wendeln mit verbreiterten Windungsbögen;

Figur 8 in schematischer Darstellung eine Vorrichtung zur Herstellung von Wendeln ohne Torsion des Drahtes;

Figur 9 is schematischer Darstellung das ineinanderfügen der Wendeln;

Figuren 10 und 11 in Gegenüberstellung die Art und Weise, in der durch verbreitete Kopfbögen der Windungen eine Scherung des Steckdrahtes verhindert wird.

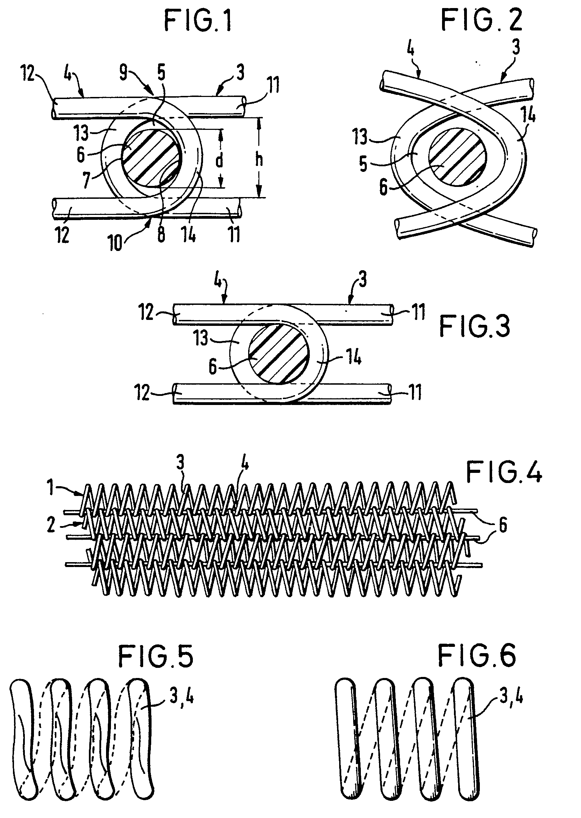

Figur 1 zeigt ein Detail eines Siebbandes, das zur besseren Erläuterung der Erfindung zum Teil auch Merkmale aufweist, die beim erfindungsgemässen Siebband zu vermeiden sind. Die Windung 3 der Wendel 1 und die Windung 4 der Wendel 2 sind ineinandergeschoben wurden und durch den dabei geformten Kanal 5 ist der Steckdraht 6 eingeschoben. Der von den sich überlappenden Windungen gebildete Kanal 5 besitzt eine Höhe h. Damit der Steckdraht 6 mit dem Durchmesser d ohne Schwierigkeiten von einem Rand des Siebbandes zum anderen Rand hindurchgesteckt werden kann, muss h grösser als d sein. Zwischen den Bögen der Windungen 3 und 4 und dem Steckdraht 6 tritt bei 7 und 8 Punktberührung auf, was Abried verursachen kann. Ausserdem kann sich auf der Oberfläche des Siebbandes bei 9 und 10 eine Rinne bilden, die sich im Papier abbildet und eine Markierung verursacht. Da die Höhe h des Kanals grösser ist als der Durchmesser d des Steckdrahtes 6, kann sich ausserdem eine Versetzung der einzelnen Windungen senkrecht zur Ebene des Siebbandes ergeben, die ebenfalls Markierung verursachen kann.

Figur 3 zeigt im Querschnitt in Längsrichtung des Siebbandes und senkrecht zum Steckdraht 6 einen Ausschnitt aus dem erfindungsgemässen Siebband. Die Windungsbögen 13, 14 liegen über einen Winkel von etwa 180° an dem Steckdraht 6 an. Der Innenradius der Windungsbögen 13, 14 entspricht also etwa dem Radius des Steckdrahtes 6. Die in Figur 1 bei 7, 8 auftretende Belastung wird daher bei dem erfindungsgemässen Siebband auf eine Linie verteilt, wodurch die Abnutzung stark vermindert wird. Die halbkreisförmigen Windungsbögen 13, 14 gehen in gerade Windungsschenkel 11, 12 über. In Längsrichtung des Steckdrahtes 6, also so wie in Figur 3 betrachtet, gehen die Windungsschenkel 11 und 12 ausserdem geradlinig ineinander über, so dass nicht die bei dem Siebband nach dem Stand der Technik bei 9 und 10 entstehenden Rinnen gebildet werden. Dadurch, dass bei dem erfindungsgemässen Siebband die Windungsschenkel 11 und 12 in einer Ebene liegen, tritt auch nicht durch eine Versetzung der einzelnen Spiralen senkrecht zur Siebebene eine Markierung auf. Gleichzeitig ist bei dem erfindungsgemässen Siebband der offene Raum gleichförmig, so dass auch eine gleichförmige Durchlässigkeit des gesamten Siebbandes gewährleistet ist.

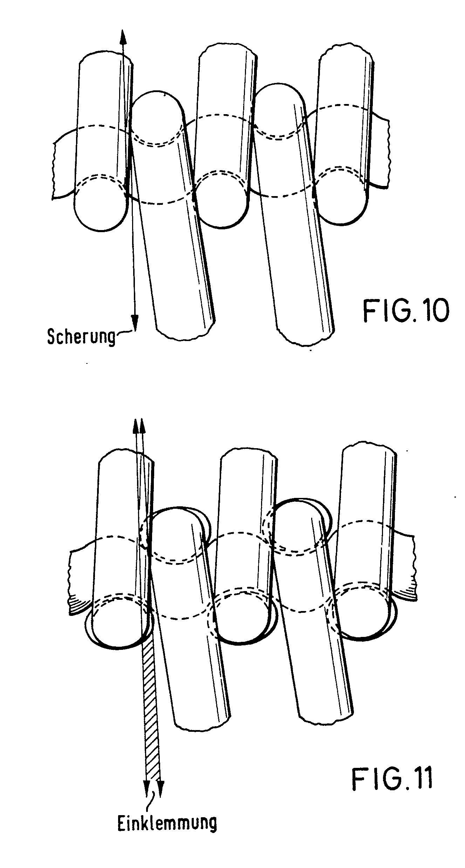

Bei dem erfindungsgemässen Siebband ist der Steckdraht 6 vorzugsweise so wie in Figuren 10 und 11 gezeigt in der Siebebene gewellt, wobei der Abstand zwischen wzei in der gleichen Richtung zeigenden Bögen, also die Wellenlänge, der Steigung der Wendeln 1, 2 entspricht. Durch diese Wellung des Steckdrahtes 6 wird eine seitliche Verschiebung der Windungen 3, 4 verhindert.

Die Wendeln 1, 2 besitzen im Siebband keine zugfedermässige Vorspannung; sie liegen also tot im Siebband und haben nicht die Tendenz, sich zusammenzuziehen. Bei dem erfindungsgemässen Siebband werden daher die Windungen 3, 4 nicht zusammengedrückt, sondern liegen kräftefrei nebeneinander.

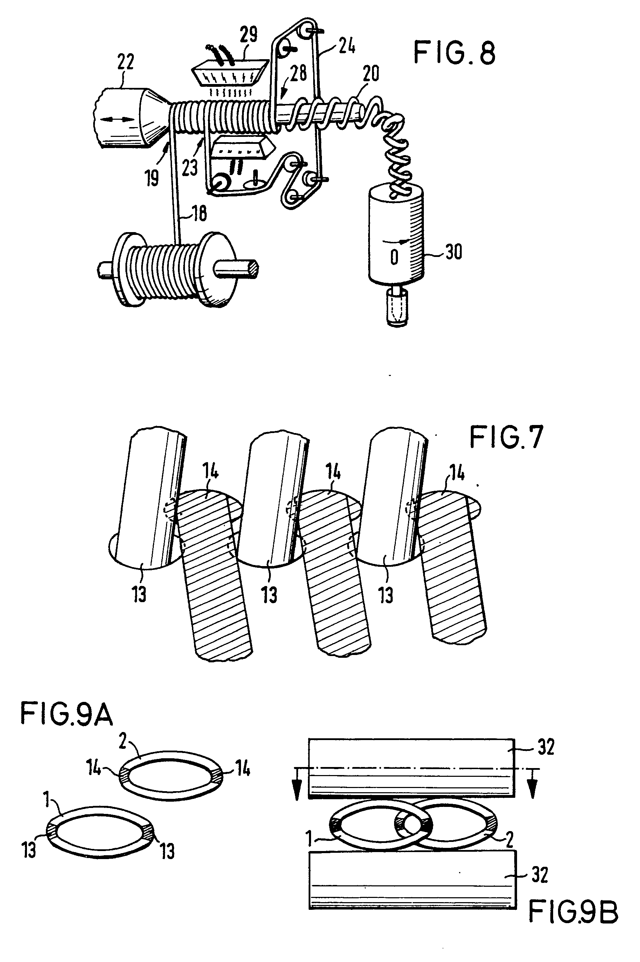

Der die Wendeln 1, 2 bildende Draht besitzt beine Torsion. Die Figuren 5 und 6 zeigen Wendeln, deren Brähte Torsion bzw. keine Torsion besitzen.

Die Herstellung des erfindungsgemässen Siebbandes erfolgt im wesentlichen in der Weise, dass eine Vielzahl von Wendeln 1, 2 jeweils in die vorausgehende Wendel eingeschoben wird, das heisst die Windungen 3 der einen Wendel 1 werden zwischen die Windungen 4 der nächsten Wendel 2 eingeschoben. Die Wendeln werden dabei jeweils soweit eingeschoben, dass die Windungen benachbarter Wendeln zusammen einen Kanal 5 bilden. In jeden dieser Kanäle wird ein Steckdraht 6 eingeführt. Der Kanal 5 muss dazu natürlich eine ausreichende Grösse besitzen. Im allgemeinen wird ein gerader Steckdraht 6 eingeführt. Nach dem Einführen aller Steckdrähte 6 wird das Siebband in Längsrichtung gespannt und dabei thermofixiert. Die Windungen 3, 4 werden durch die Thermofixierung zu den in Figur 3 gezeigten Ovalen mit halbkreisförmigen Windungsbögen 13, 14 und geraden Windungsschenkeln 11, 12 verformt und die Windungsbögen 13, 14 legen sich eng an den Steckdraht 6 an. Der Steckdraht 6 wird seinerseits zu einer Wellenlinie verformt, wie es in den Figuren 10 und 11 gezeigt ist.

Da die Thermofixierung erst stattfindet, nachdem das Siebband zusammengefügt wurde, können die Wendeln 1, 2 zunächst eine solche Form haben, dass der Steckdraht 6 möglichst leicht in den durch die Windungsbögen 13, 14 gebildeten Kanal 5 eineführt werden kann. Erst durch die spätere Thermofixierung erhalten die Wendeln den flachen, ovalen Querschnitt und entspricht der Abstand der Windungsschenkel 11, 12 gleich dem Durchmesser des Steckdrahtes 6. Die Oberfläche des Siebbandes wird dadurch sehr glatt und verursacht keine Markierung.

Zur Herstellung des erfindungsgemässen Siebbandes können somit Wendeln mit weitgehend beliebiger Querschnittsform verwendet werden, zum Beispiel mit kreisförmigen oder elliptischem Querschnitt. Die in Figur 2 dargestellten Windungsbögen 13, 14 gehören zu Wendeln mit elliptischem Querschnitt.

Die Steigung der eingesetzten Wendeln ist nicht entscheidend und sie kann zwischen dem Einfachen und Doppelten der Drahstärke liegen. Auch Wendeln mit grösseren Steigungen können verwendet werden. Werden Wendeln verwendet, deren Steigung kleiner als die doppelte Drahtstärke ist, so werden sie vor dem Ineinanderschieben so weit auseinandergezogen, bis die Steigung etwa dem doppelten Drahtdurchmesser entspricht.

Im allgemeinen werden daher Wendeln verwendet, die nicht Windung an Windung gewickelt sind, sondern deren Steigung grösser ist als der Drahtdurchmesser, vorzugsweise soll die Steigung etwas grösser als die doppelte Drahtstärke sein. Dadurch wird das Ineinanderfügen der Wendeln vereinfacht. Die Herstellung derartiger Wendeln wird später in Verbindung mit Figur 8 beschrieben.

Vorzugsweise besitzen benachbarte Wendeln 1, 2 einen entgegengesetzten Wicklungssinn, wie dies in Figur 4 gezeigt ist. Die Windungsbögen 13, 14 fügen sich dadurch besonders gut ineinander, da dann Tangenten, die an die Windungsbögen 13 bzw. 14 gelegt sind, die gleiche räumliche Ausrichtung besitzen. Es ist jedoch auch möglich, mehrere Wendeln mit Rechtsdrehung mit jeweils mehreren Wendeln mit Linksdrehung abzuwechseln. Es können in einem Siebband auch nur Wendeln mit gleichem Drehsinn verwendet werden, wobei dann jedoch gegebenenfalls besondere Vorkehrungen getroffen werden müssen, um ein Schräglaufen des Siebes zu verhindern.

Werden Wendeln mit verbreiterten Windungsbögen 13, 14 verwendet, so hängt die zweckmässigste Steigung der Wendeln nicht nur von der Drahtstärke der Wendeln ab, sondern auch von der Breite der Windungsbögen 13, 14. Vorzugsweise beträgt die Steigung der Wendeln dann mindestens das Doppelte der Drahtstärke und ist höchstens gleich der Summe aus Drahtstärke und Kopfbreite.

Das Verbinden zweier Wendeln miteinander ist aufgrund des genau eingestellten freien Raumes zwischen den Windungen relative einfach. Werden Wendeln mit verbreiterten Windungsbögen 13, 14 verwendet, so legt man zwei Wendeln so, dass sie seitlich versetzt übereinanderliegen (siehe Figur 9a), dehnt die Wendeln etwas in der Länge und führt sie dann zwischen zwei Presswalzen 32 hindurch, wodurch sie ineinandergedrückt werden (Figur 9b). Nach Aufheben der auf die Wendeln ausgeübten Spannung halten die verdickten Köpfe oder Windungsbögen 13, 14 die Wendeln in ihrer Lage, so dass der Steckdraht eingebracht werden kann. In gleicher Weise werden die Folgenden Wendeln eingeschoben.

Die breiteren Köpfe müssen beim Ineinanderfügen der Wendeln zwischen die Windungen der benachbarten Wendeln gebracht werden. Wenn jetzt der Zwischenraum den Windungen etwas kleiner ist als die Breite der Köpfe, so braucht eine Wendel nur minimal gedehnt zu werden, um die Köpfe durchzulassen. Dies ist ein Vorteil gegenüber Spiralen, die Windung an Windung gewickelt sind und die deshalb auf das mehr als das Zweifache ihrer ursprünglichen Länge auseinandergezogen werden müssen. Eine derartig hohe Dehnung der Wendeln bringt wegen der erforderlichen hohen Präzision erhebliche Schwiergkeiten, da zum Beispiel bereits relativ kleine Unregelmässigkeiten des Drahtmaterials zu einer unterschiedlichen Dehnung verschiedener Abschnitte der Wendeln führen können.

Nachdem die Köpfe der Wendel in die benachbarte Wendel eingebracht sind, wird die Dehnung aufgehoben und die Windungen der ineinandergefügten Wendeln legen sich ohne Vorspannung aneinander. Die breiteren Köpfe verhindern, dass sich die Wendeln wieder voneinander lösen. Dadurch kann der Steckdraht mühelos eingeführt werden. Diese gegenseitige Verriegelung der Wendeln ist in Figur 7 gezeigt.

Das Siebband ist nach dem Ineinanderfügen der Wendeln und dem Einschieben des Steckdrahtes noch nicht gebrauchsfertig. Um die Gefahr von Markierungen im Papier zu vermeiden, muss die Oberfläche des Siebbandes noch geglättet werden. Ausserdam können sich die Windungen der Wendeln noch frei über den Steckdraht bewegen. Eine derartige Bewegung der Windungen kann bei der Handhabung des Siebbandes leicht entstehen und es besteht die Gefahr, dass sie Wendeln aufgrund der Reibung in dem gelängten Zustand verbleiben. Ferner können die Wendeln stellenweise ineinandergedrückt werden, so dass die Wendeln an diesen Stellen nicht mehr vorspannungsfrei sind. An diesen Stellen ist also durch Einwirkungen von aussen die Steigung der Wendeln auf weniger als die doppelte Drahtstärke verkleindert. Ähnliche Fehler können durch kleinere Abweichungen in der Drahtstärke entstehen. Alle diese Fehler würden schon bei der Montage des Siebbandes, zum Beispiel in einer Papiermaschine, eine Faltenbildung des Siebbandes verursachen und dieses dadurch unbrauchbar machen.

Durch die bereits erwähnte Thermofixierung des Siebbandes werden diese Schwierigkeiten behoben. Die Thermofixierung beseitigt eine eventuell vorhandene zugfedermässige Vorspannung der Wendeln, glättet die Oberfläche des Siebbandes und lässt die einzelnen Windungen mehr oder weniger in das Material des Stockdrahtes eindringen, wodurch der Steckdraht wellenförmig verformt wird. Die Wellenlänge entspricht dabei etwa der Steigung der Wendeln. Die einzelnen Windungen sind dadurch gegen seitliches Verschieben gesichert. Verbreiterte Köpfe der Wendelwindungen verhindern nicht nur, dass sich die Wendeln voneinander lösen bevor der Steckdraht eingeführt worden ist, sie verkleinern vielmehr auch den Abrieb zwischen den Windungen und den Steckdrähten, da der Kopf eine grössere Berührungsfläche mit dem Steckdraht besitzt als ein nicht verformter Draht. Ferner ist die Belastung des Steckdrahtes bei verbreiterten Windungsbögen 13, 14 güngstiger, da die Berührungsfläche zwischen Steckdraht und Wendeldraht durch den Kopf vergrössert wird. Bei unverformetem Draht, also Draht ohne verbreiterte Köpfe, wird der Steckdraht ferner auf Scherung belastet (Figur 10), wogegen synthetisches Drahtmaterial infolge seiner makromolekularen Längsorientierung nur mässig widerstandsfähig ist. Durch das Bestehen verbreiterter Köpfe, die einander — in Längsrichtung des Siebbandes gesehen — überlappen, wird ein Teil des Steckdrahtes, zwischen den Köpfen eingeklemmt und wird die Scherungsbelastung stark verringert (Figur 11).

Falls mit der auf das Siebband bei der Thermofixierung aufgeübten Spannung und der zugerführten Wärme eine völlig glatte Oberfläche nicht erreicht wird, kann zusätzlich senkrecht auf die Fläche des Siebbandes Druck ausgeübt werden, zum Beispiel durch Heizplatten. Die Verformung der anfangs runden oder elliptischen Wendel zu einem Oval ist dadurch nicht mehr ausschliesslich abhängig von der Grösse der ausgeübten Spannung.

Da erst das bereits zusammengestellte Siebband der Thermofixierung unterworfen wird, können die Temperatur, die Spannung und die eventuell durch die Heizplatten ausgeübte Druckkraft so gewählt werden, dass nicht nur die Windungen 3, 4 in die Form eines flachen Ovals gebracht werden, sondern dass die Windungen 3, 4 auch etwas in das Material der Steckdrähte 6 eindringen. Dadurch wird eine Sperre gegen das Versetzen der Windungen 1, 2 längs der Steckdrähte 6 erreicht und eine Verschiebung der Windungen 1, 2 längs der Steckdrähte 6, die zum Beispiel während des Einziehens des Siebbandes in ein Papiermaschine auftreten könnten und Wellen im Siebband verursachen würden, verhindert. Ebenso wird ein Zwischenraum zwischen den Wendeln verhindert.

Um eine gute und gleichmässige Wärmezufuhr über die gesamte Dicke des Siebbandes und die gesamte Oberfläche des Siebbandes zu erhalten, soll die Wärme vorzugsweise durch einen erwärmten Luftstrom zugeführt werden.

Eine Vorrichtung zur Herstellung torsionsfreier Kunststoffwendeln ist in Figur 8 gezeigt. Die Vorrichtung weist einen sich drehenden Dorn 20 auf sowie einen Konus 22, der hin- und herbeweglich an einem Ende des Dorns 20 geführt ist. Die Wendel wird in der Weise erzeugt, dass ein erster Draht 18 bei 19 dem sich schnell drehenden Dorn 20 zugeführt wird. Der erste Draht 18 wird also zunächst Windung an Windung auf den Dorn 20 aufgewickelt. Mittels des sich schnell hin- und herbewegenden Konus 22 wird er über den Dorn 20 zu der in Figur 8 gesehenen rechten Seite abgeschoben. Nach einer kleinen Anzahl von Windungen läuft bei 23 ein zweiter Draht 24 aus hitzebeständigem Material auf den Dorn 20 und legt sich zwischen die Windungen des ersten Drahtes 18. Dadurch werden die Windungen des ersten Drahtes 18 auseinandergedrückt, wobei der Abstand der Windungen des ersten Drahtes durch die Stärke des zweiten Drahtes 24 genau festgelegt werden kann. Es ist auch möglich, beide Drähte etwa an der gleichen Stelle dem Dorn 20 zuzuführen. Um zu verhindern, dass der Konus 22 die beiden Drähte übereinanderdrückt, sollten sie dann jedoch einen Windel von 90° miteinander bilden. Der zweite Draht 24 läuft für eine bestimmte Anzahl von Vindungen mit dem ersten Draht 18 mit, und zwar durch die Thermofixierungszone hindurch, in der die aus dem ersten Draht 18 gebildete Wendel in dem auseinandergepresten Zustand durch eine Heizeinrichtung 29 fixiert wird. Nach dem Durchgang durch die Thermofixierungszone verlässt der zweite Draht 24 bei 28 den Dorn 20 und wird danach entweder auf eine Spule aufgewickelt oder auf einer geschlossenden Bahn, in der Spann- und Bremseinrichtungen vorgesehen sind, wieder zu der Stelle 19 zurückgeführt. Die aus dem ersten Draht 18 gebildete Wendel ist nun in der gewünschten Form fixiert und schiebt sich nun von dem schmaler werdenden Dorn 20 ab und fällt in den Auffangbehälter 30. Da sich die Wendel um ihre Achse dreht, ist es notwendig, dass der Auffangbehälter 30 diese Drehbewegung synchron mitmacht, weil sich die Wendel sonst in ein unentwirrbares Knäuel verschlingen würde.

Auf diese Weise kann aus dem ersten Draht 18 eine Wendel hergestellt werden, deren Steigung genau auf einen Wert zwischen der doppelten Drahtstärke und der Summe aus Drahtstärke und Kopfbreite eingestellt werden kann und bei der der Draht torsionsfrei ist.

Soll eine Wendel mit verbreiterten Köpfen oder Windungsbögen 13, 14 hergestellt werden, so wird das Drahtmaterial auf einen Dorn 20 mit ovalem Querschnitt gewickelt. Durch den ovalen Querschnitt wird erreicht, dass die Drahtspannung während des Aufwickelns periodisch ansteigt und abfällt, und zwar so, dass die Spannung immer dann schockartig ansteigt, wenn der erste Draht 18 über die runden Seiten des ovalen Dornes 20 läuft. Die Drahtspannung wird dabei so gewält, dass der ruckartige Anstieg der Spannung eine Deformation des Drahtmaterials bewirkt. Der erste Draht 18 verbreitert sich an dieser Stelle etwas, das heisst seine Abmessung parallel zur Achse des Dornes 20 wird grösser. Die Wendeln besitzen also an den Aussenenden oder Windungsbögen 13, 14 des Ovals eine Verbreiterung des Drahmaterials (siehe Figur 7).

Würden die Wendeln in üblicher Weise hergestellt, so besässe der Draht der Wendeln 3, 4 Torsion, die dazu führt, dass sich die Windungsschenkel in Draufsicht zu einem langgestreckten S verformen, siehe Figur 5. Die Stelle der Verformung lässt sich nicht vorherbestimmen, so dass die nebeneinander zu liegen kommenden Windungen im allgemeinen einen grösseren Abstand besitzen als aufgrund der Drahtstärke zu erwarten ist.

Figur 6 zeigt demgegenüber eine torsionsfrei hergestellte Wendel, d.h. eine Wendel, deren Draht bei der Herstellung der Wendel keine Torsion erhalten hat. Eine torsionsfreie Wendel kann mit einer anderen torsionsfreien Wendel glatt ineinandergefügt werden. Da keine Verzerungen und Verformungen der Windungen vorhanden sind, beanspruchen die Wendeln nach dem Ineinanderfügen nach mehr Länge als dem Drahtdurchmesser und der Anzahl der Windungen entspricht.

Mit Torsion hergestellte Wendeln können nicht durch nachträgliche Thermofixierung torsionsfrei gemacht werden, da die dazu erforderlichen hohen Temperaturen zu einer Verschlechterung der Eigenschaften des Kunststoffmaterials un zu dessen Degradierung führen würden.

### Beispiel

Aus 0,7 mm dickem Polyestermonofilament werden Wendeln mit ovalem Querschnitt hergestellt, wobei der grösste und kleinste Durchmesser des Ovals 6,8 bzw. 3,8 mm beträgt. Die Breite der Köpfe beträgt 0,93 mm und die Steigung 1,54 mm. Als Steckdraht wurde 0,9 mm dickes Polyesterfilament verwendet. Die Dicke des Siebbandes vor dem Thermofixieren betrug 3,8 mm und die Anzahl der Steckdrähte betrug 23 pro 10 cm Siebbandlänge. Die Anzahl der Spiralwindungen betrug 65 pro 10 cm Siebbandbreite. Nach dem Thermofixieren betrug die Dicke des Siebbandes 2,5 mm und die Anzahl der Steckdrähte 20,3 pro 10 cm Siebbandlänge sowie die Anzahl der Windungen 65 pro 10 cm Siebbandbreite. Das Siebband hatte ein Gewicht von 1,450 kg/m$^2$ und eine Luftdurchlässigkeit von 950 cfm. Die maximalen bzw. minimalen Abmessungen des ovalen Querschnitts der Wendeln waren nach dem Thermofixieren 7,2 bzw. 2,5 cm.

## Patentansprüche

1. Siebband mit einer Vielzahl von Wendeln aus thermofixierbarem, monofilem Kunststoffdraht, wobei benachbarte Wendeln (1, 2) jeweils derart ineinandergeschoben sind, daß die Windungen (3, 4) einer Wendel zwischen die Windungen der benachbarten Wendel eindringen und die Windungen aneinanderliegen, und mit einem Verbindungsmittel, das durch den von den Windungen benachbarter Wendeln gebildeten Kanal (5) hindurchgeführt ist, wobei der Draht der Wendeln (1, 2) torsionsfrei ist, dadurch gekennzeichnet,

daß die Wendeln (1, 2) keine zug- oder druckfedermäßige Vorspannung besitzen;

daß das Verbindungsmittel ein Steckdraht (6) ist und

daß die Windungen (3, 4) über einen Teil des Umfangs des Steckdrahtes (6) anliegen und etwas in das Material des Steckdrahtes (6) eindringen.

2. Siebband nach Anspruch 1, dadurch gekennzeichnet, dass die Windungen (3, 4) der Wendeln (1, 2) oval sind und etwa parallele Windungsschenkel (11, 12) und etwa halbkreisförmige Windungsbögen (13, 14) aufweisen.

3. Siebband nach Anspruch 2, dadurch gekennzeichnet, dass der Draht der Wendeln (1, 2) im Bereich der Windungsbögen (13, 14) in Längsrichtung der Wendeln (1, 2) verbreiterte Köpfe besitzt.

4. Siebband nach Anspruch 3, dadurch gekennzeichnet, dass die Steigung der Wendeln (1, 2) zwischen der doppelten Drahtstärke und der Summe aus Drahtstärke und Breite der Köpfe der Windungsbögen (13, 14) beträgt.

5. Verfahren zur Herstellung eines Siebbandes nach einem der Ansprüche 1 bis 4, bei dem die Wendeln (1, 2) aus thermofixierbaren Kunststoff derart ineinandergeschoben werden, daß die Windungen (3, 4) einer Wendel zwischen die Windungen der nächsten Wendel zu liegen kommen, die Windungen (3, 4) benachbarter Wendeln einander berühren und die sich überlappenden Windungen der Wendeln einen Kanal (5) bilden, und ein Steckdraht (6) durch den Kanal geschoben wird, wobei torsionsfreie Wendeln (1, 2) eingesetzt werden, gekennzeichnet, daß das Siebband nach dem Einschieben des Steckdrahtes (6) bei einer solchen Temperatur und einer solchen Längsspannung thermofixiert wird, daß eine eventuell vorhandene zug- oder druckfedermäßige Vorspannung der Wendeln (1, 2) aufgehoben wird und die Windungen (3, 4) der Wendeln in das Material der Steckdrähte (6) eindringen.

6. Verfahren nach Anspruch 5, dadurch gekennzeichnet, dass während der Thermofixierung auf die Fläche des Siebbandes Druck Ausgeübt wird.

7. Verfahren nach Anspruch 5 oder 6, dadurch gekennzeichnet, dass bei der Thermofixierung die Wärme durch einen Heisslufstrom zugeführt wird.

## Revendications

1. Bande de tamisage comportant un ensemble de boudins hélicoïdaux constitués chacun d'un monofilament de matière plastique thermodurcissable, les boudins hélicoïdaux adjacents (1, 2) étant engagés l'un dans l'autre de telle manière que les spires (3, 4) de l'un des boudins pénètrent entre les spires boudin adjacent associé, les spires reposant les unes contre les autres, avec un moyen de jonction qui passe dans un canal (5) formé par les spires des boudins adjacents;

le fil des boudins (1, 2) étant exempt de torsion;

caractérisée en ce que les boudins hélicoïdaux (1, 2) ne comportant aucune précontrainte en traction ou en compression;

que le moyen de jonction est un fil d'assemblage (6) et en ce que les spires (3, 4) sont en appui sur une partie du pourtour de la section du fil d'assemblage (6) et péntètrent quelque peu dans la masse du fil d'assemblage (6).

2. Bande de tamisage suivant la revendication 1, caractérisée en ce que les spires (3, 4) des boudins hélicoïdaux (1, 2) sont ovales, présentent des branches (11, 12) sensiblement parallèles, et des arceaux extrêmes (13, 14) sensiblement semi-circulaires.

3. Bande de tamisage suivant la revendication 2, caractérisée en ce que le fil des boudins hélicoïdaux (1, 2) présente des têtes élargies dans le sens longitudinal des boudins (1, 2), au voisinage des arceaux extrêmes (13, 14) des spires.

4. Bande de tamisage suivant la revendication 3, caractérisée en ce que le pas d'enroulement des boudins hélicoïdaux a une valeur comprise entre le double du calibre du fil et la somme du calibre du fil et de la largeur des têtes des arceaux extrêmes (13, 14) des spires.

5. Procédé de montage d'une bande de tamisage, suivant une des revendications 1 à 4, dont les boudins (1, 2), en matière plastique thermodurcissable, sont engagés les uns dans les autres, de telle manière que les spires (3, 4) d'un boudin pénètrent entre les spires du boudin suivant, et sont en contact mutuel, les spires qui se recouvrent formant un passage intérieur (5) dans lequel est engagé un fil d'assemblage (6) supportant, sans torsion, les boudins (1, 2), caractérisé en ce qu'après l'introduction du fil d'assemblage (6), la bande de tamisage est durcie par chauffage à une température telle, et sous une tension longitudinale telle, qu'une éventuelle précontrainte en traction ou en compression des boudins (1, 2) soite évitée, et que les spires (3, 4) pénètrent dans la masse des fils d'assemblage (6).

6. Procédé suivant la revendication 5, caractérisé en ce qu'on exerce un effort de compression sur la surface de la bande de tamisage, pendant le durcissement à chaud.

7. Procédé suivant la revendication 5 ou 6, caractérisé en ce que, pendant le durcissement thermique, la chaleur est apportée par un courant d'air chaud.

## Claims

1. A sieve belt comprising a multiplicity of helices of thermosettable synthetic resin monofilament in which adjacent helice (1, 2) are interlocked such that the windings (3, 4) of one helix enter between the windings of the adjacent helix, and the windings contact each other and having a joining means passed through the channel (5) formed by the windings of adjacent helices, the filament of the helices (1, 2) being free of torsion, characterized in

that the helices (1, 2) are free from tension or compression spring-like bias;

that the joining means is a pintle filament (6) and

that the windings (3, 4) contact the pintle filament (6) over part of its circumference and protrude somewhat into the material of the pintle filament (6).

2. Sieve belt according to claim 1, characterized in that the windings (3, 4) of the helices (1, 2) are oval and have substantially parallel windings legs (11, 12) and substantially semicircular winding arcs (13, 14).

3. Sieve belt according to claim 2, characterized in that the region of the winding arcs (13, 14) the filament of the helices (1, 2) has portions enlarged in longitudinal direction of said helices (1, 2).

4. Sieve belt according to claim 3, characterized in that the pitch of the helices (1, 2) is between twice the filament thickness and the sum of filament thickness and width of the enlarged winding arcs (13, 14).

5. A method for producing a sieve belt according to one of claims 1 to 4, in which the helices (1, 2) of thermosettable synthetic resin are interlocked such that the windings (3, 4) of one helix come to lie between the adjacent helix, that the windings (3, 4) of adjacent helices contact each other and that the overlapping windings of the helices form a channel (5) and a pintle filament (6) is passed through said channel, helices (1, 2) free of torsion being employed, characterized in that after the insertion of the pintle filament (6) the sieve belt is thermoset at such a temperature and such a longitudinal tension, that a possibly existing tension or compression spring-like bias is removed and the windings (3, 4) of the helices protrude somewhat into the material of the pintle filament (6).

6. Method according to claim 5 characterized in that pressure is exerted on the surface of the sieve belt during thermosetting.

7. Method according to claim 5 or 6 characterized in that for thermosetting the heat is supplied by way of a stream of hot air.

# FIG.1

# FIG.2

# FIG.3

# FIG.4

# FIG.5

# FIG.6

FIG. 8

FIG. 7

FIG.9A

FIG.9B

FIG. 10

Scherung

FIG. 11

Einklemmung